# EUROPÄISCHE PATENTSCHRIFT

(11) **EP 0 651 779 B1**
(45) Veröffentlichungstag und Bekanntmachung des Hinweises auf die Patenterteilung: **04.06.1997**
(21) Anmeldenummer: 93915848.1
(22) Anmeldetag: 08.07.1993
(51) Int. Cl.: C11D 3/16, C08B 31/04, C07C 235/10, C07C 229/22, C07C 235/12, C07D 317/34

(54) **N,O-ACETAL- ODER CARBONAMIDSTRUKTUREN ENTHALTENDE KONDENSATIONSPRODUKTE, VERFAHREN ZU IHRER HERSTELLUNG UND IHRE VERWENDUNG**
CONDENSATION PRODUCTS CONTAINING N,O-ACETAL- OR CARBONAMIDE STRUCTURES, METHODS OF PREPARING THEM AND THEIR USE
PRODUITS DE CONDENSATION A STRUCTURE N,O-ACETAL OU CARBONAMIDE, LEUR PROCEDE DE FABRICATION ET LEUR UTILISATION

(30) Priorität: 20.07.1992 DE 4223807
(43) Veröffentlichungstag der Anmeldung: 10.05.1995
(73) Patentinhaber: BASF Aktiengesellschaft, 67063 Ludwigshafen (DE)
(72) Erfinder: BOECKH, Dieter, D-6703 Limburgerhof (DE); FUNHOFF, Angelika, D-6900 Heidelberg (DE); KRONER, Matthias, D-6719 Eisenberg (DE); HARTMANN, Heinrich, D-6703 Limburgerhof (DE); BAUR, Richard, D-6704 Mutterstadt (DE); KUD, Alexander, D-6509 Eppelsheim (DE); SCHWENDEMANN, Volker, D-6730 Neustadt (DE)
(86) Internationale Anmeldenummer: EP9301784
(87) Internationale Veröffentlichungsnummer: WO9402582

(56) Entgegenhaltungen:
- EP-A- 0 203 523
- EP-A- 0 280 223
- EP-A- 0 317 542
- EP-A- 0 463 801

## Beschreibung

Die Erfindung betrifft N,O-Acetal- oder Carbonamidstrukturen enthaltende Kondensationsprodukte, die durch Spaltung von Acetal- oder Ketallactonen mit Aminocarbonsäuren, primären oder sekundären Aminen und/oder Polyethyleniminen erhältlich sind, Verfahren zu ihrer Herstellung durch Umsetzung von Verbindungen, die mindestens eine Acetal- oder Ketallactongruppe enthalten, mit Aminocarbonsäuren, primären oder sekundären Aminen und/oder Polyethyleniminen und Verwendung der so erhältlichen N,O-Acetal- oder Carbonamidstrukturen enthaltenden Kondensationsprodukte als Zusatz zu phosphatarmen und phosphatfreien Wasch- und Reinigungsmitteln.

Acetallactone sind seit langem bekannt. So wird beispielsweise im Chemischen Zentralblatt, Band 73, I, 300 (1902) das Kondensationsprodukt von Formaldehyd mit Zitronensäure als cyclisches Acetallacton beschrieben. Entsprechende Bisacetallactone der Weinsäure sind aus J. Chem. Soc. Bd. 125, 1943 (1924) und Ber. Dt. Chem. Ges., Band 60, 488 (1927) bekannt. Aus der EP-B-0280 223 sind Polykondensate von Polyolcarbonsäuren und Dialdehyden bekannt, die als Polyacetale beschrieben werden. Aus der US-A-3763 189 ist das cyclische Acetallacton aus Zitronensäure und Glyoxylsäure bekannt.

Aus der US-A-3989 637 ist die Verwendung von Acetallactonen als Korrosionsinhibitor bekannt. Die Acetallactone können beispielsweise durch Umsetzung von Hydroxycarbonsäuren, wie

Zitronensäure mit Formaldehyd oder Formaldehyd abgebenden Verbindungen oder Glyoxylsäure hergestellt werden.

Aus der EP-A-0 280 223 sind Polyacetale bekannt, die durch Umsetzung von Dialdehyden mit mindestens 3 OH-Gruppen enthaltenden Polyolcarbonsäuren, die 5 bis 7 C-Atome aufweisen im Molverhältnis 1:0,25 bis 4 in wäßrigem Medium in Gegenwart von sauren Katalysatoren erhältlich sind. Die Polyacetale werden als Zusatz zu Waschmitteln und als Komplexbildner verwendet.

Der Erfindung liegt die Aufgabe zugrunde, neue Stoffe zur Verfügung zu stellen.

Die Aufgabe wird erfindungsgemäß gelöst mit N,O-Acetal- oder Carbonamidstrukturen enthaltenden Kondensationsprodukten, die erhältlich sind durch Kondensation von
(a) Verbindungen, die mindestens einmal die Strukturelemente 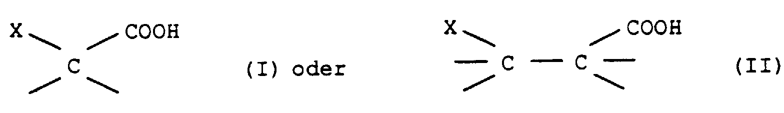 enthalten und in denen X = OH oder NHR und R = C₁- bis C₆-Alkyl oder -(CH₂)ₙ-COOH mit n = 1 - 4 bedeuten und die sich von Hydroxycarbonsäuren, sekundären Aminosäuren, Poly-α-hydroxyacrylsäure, Poly-α-hydroxymaleinsäure, verseiften Copolymerisaten aus Vinylestern mit moethylenisch ungesättigten Mono- oder Dicarbonsäuren oder Veresterungsprodukten von mehrbasischen Hydroxycarbonsäuren mit Polyhydroxyverbindungen ableiten,
(b) Aldehyden, Ketonen, Aldehyd- oder Ketocarbonsäuren zu Acetallactonen und anschließende
   Spaltung der Acetal- oder Ketallactone mit
(c) Aminosäuren, Iminodiessigsäure, Iminodipropionsäure, N-Methylasparaginsäure, N-Methylglutaminsäure primären oder sekundären Aminen, Polyrinylaminen und/oder Polyethyleniminen
zu N,O-Acetal- oder Carbonamidstrukturen enthaltenden Kondensationsprodukten. Die Kondensationsprodukte werden als Zusatz zu phosphatarmen und phosphatfreien Wasch- und Reinigungsmitteln verwendet.

Die Aufgabe wird außerdem gelöst mit einem Verfahren zur Herstellung von N,O-Acetal- oder Carbonamidstrukturen enthaltenden Kondensationsprodukten, wenn man Verbindungen, die mindestens einmal die Strukturelemente 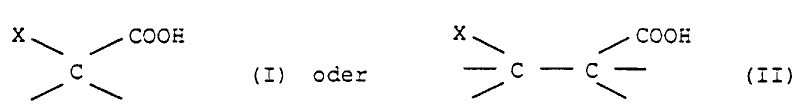 enthalten und in denen X = OH oder NHR und R = C₁- bis C₆-Alkyl oder -(CH₂)ₙ-COOH mit n = 1 - 4 bedeuten und die sich von Hydroxycarbonsäuren, sekundären Aminosäuren, Poly-α-hydroxyacrylsäure, Poly-α-hydroxymaleinsäure, verseiften Copolymerisaten aus Vinylestern mit moethylenisch ungesättigten Mono- oder Dicarbonsäuren oder Veresterungsprodukten von mehrbasischen Hydroxycarbonsäuren mit Polyhydroxyverbindungen ableiten, mit
(b) Aldehyden, Ketonen, Aldehyd- oder Ketocarbonsäuren zu Acetallactonen umsetzt und die Acetallactone anschließend mit
(c) Aminosäuren, Iminodiessigsäure, Iminodipropionsäure, N-Methylasparaginsäure, N-Methylglutaminsäure, primären oder sekundären Aminen, Polyvinylaminen und/oder Polyethyleniminen
in wäßrigem Medium im alkalischen pH-Bereich zu N,O-Acetal- oder Carbonamidstrukturen enthaltenden Kondensationsprodukten spaltet.

Verbindungen der Gruppe (a), die mindestens einmal die Strukturelemente 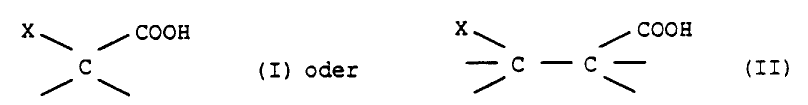 enthalten und in denen X jeweils für eine OH- oder NHR-Gruppe steht und R eine C₁- bis C₆-Alkylgruppe oder -(CH₂)ₙ-COOH Gruppe mit n = 1 - 4 bedeutet, können sich von niedrigmolekularen und hochmolekularen Verbindungen ableiten.

Niedrigmolekulare Verbindungen der Gruppe (a) sind beispielsweise Hydroxycarbonsäuren wie Zitronensäure, Äpfelsäure, Weinsäure, Isozitronensäure, Tartronsäure, Milchsäure und Glycolsäure. Verbindungen dieser Art enthalten die obengenannten Struktureinheiten der Formel I. Niedrigmolekulare Verbindungen der Gruppe (a), die Strukturelemente der Formel I mit X = NHR enthalten, sind sekundäre Aminosäuren, wie Iminodiessigsäure, N-Methylglycin, N-Methyl-asparaginsäure, N-Methylglutaminsäure oder andere N-Alkyl-substituierte Aminosäuren, bei denen der Alkylsubstituent bis zu 6 Kohlenstoffatome aufweisen kann.

Verbindungen der Gruppe (a), die Strukturelemente der Formel II enthalten, leiten sich von β-Hydroxybuttersäuren oder N-Alkyl-substituierten β-Aminocarbonsäuren ab, z.B. β-Hydroxybuttersäure, β-Hydroxyvaleriansäure, Iminodipropionsäure und N-Methyl-β-Alanin.

Geeignet sind außerdem Polykondensate oder Polymerisate, die Strukturelemente der Formeln I oder II enthalten. Geeignete polymere Verbindungen sind beispielsweise Poly-α-hydroxyacrylsäure oder Poly-α-hydroxymaleinsäure sowie jeweils deren Copolymerisate mit anderen monoethylenisch ungesättigten Monomeren, z.B. eignen sich als Comonomere Acrylsäure, Methacrylsäure, Acrylamid, Methacrylamid, Acrylnitril, Methacrylnitril, Maleinsäure, Itaconsäure, N-Vinylformamid, Vinylacetat, Vinylpropionat und Styrol. Die hierfür in Betracht kommenden Homo- und Copolymerisate, die die Strukturelemente der Formel I mindestens einmal enthalten, haben K-Werte von 8 bis 120 (bestimmt nach H. Fikentscher in 1-gew.-%iger wäßriger Lösung bei pH 7 am Natriumsalz und 25°C).

Weitere geeignete Polymerisate, die als Verbindungen der Gruppe (a) eingesetzt werden können, sind verseifte Copolymerisate aus Vinylestern mit monoethylenisch ungesättigten Mono- oder Dicarbonsäuren. Solche Copolymerisate werden beispielsweise dadurch hergestellt, daß man einen Vinylester, wie Vinylacetat oder Vinylpropionat mit einer monoethylenisch ungesättigten Carbonsäure wie Acrylsäure oder Maleinsäure oder auch einer Mischung von monoethylenisch ungesättigten Carbonsäuren copolymerisiert und das dabei entstehende Copolymerisat anschließend hydrolysiert, so daß aus den einpolymerisierten Vinylestereinheiten Vinylalkoholeinheiten entstehen. Solche Verbindungen enthalten dann Strukturelemente der Formel II mit X = OH.

Neben den Polymerisaten eignen sich auch Veresterungsprodukte von mehrbasischen Hydroxycarbonsäuren mit Polyhydroxyverbindungen, die beispielsweise aus der DE-B 1 617 122 oder der DE-B 2 147 778 bekannt sind. Hierbei handelt es sich im wesentlichen um Zitronensäureester von Stärke, Sorbit, Glycerin, Ethylenglycol, Polyethylenglycol und Zitronensäureester von Blockcopolymerisaten aus Ethylenoxid und Propylenoxid. Außerdem eignen sich Zitronensäureester von Mono-, Oligo- und Polysacchariden sowie Zitronensäureester von Polyvinylalkohol. Anstelle von Zitronensäure kann man auch Isozitronensäure oder eine andere mehrbasische Hydroxycarbonsäure zur Herstellung geeigneter Verbindungen der Gruppe (a) verwenden. Die Zitronensäureester von Polyvinylalkohol, Oligo- oder Polysacchariden werden vorzugsweise dadurch erhalten, daß man bei der Veresterung einen Überschuß an Zitronensäure bzw. Isozitronensäure verwendet. Beispielsweise arbeitet man mit einem 1,5- bis 20-, vorzugsweise 2- bis 10-fachen Übeschuß an Zitronensäure oder Isozitronensäure bei der Veresterung der genannten Polyhydroxyverbindungen. Nach der Esterbildung wird die überschüssige Säure abgetrennt. Weitere geeignete Verbindungen der Gruppe (a) sind Polyester von Zitronensäure oder Isozitronensäure mit Polyhydroxycarbonsäuren, die mindestens 2 OH-Gruppen tragen wie beispielsweise Weinsäure, Bis-(hydroxymethyl)propionsäure, Glucarsäure oder Gluconsäure. Außerdem eignen sich Veresterungsprodukte von Iminodiessigsäure mit Polyhydroxyverbindungen wie Ethylenglykol, Diethylenglykol, Polyethylenglykol mit mittleren Molmassen bis zu 10 000, Glycerin, Sorbit, Mono-, Oligo- oder Polysacchariden oder Polyvinylalkoholen.

Die oben unter den verschiedenen Gruppen von Polymeren erwähnten Polyvinylalkohole bzw. die Copolymerisate, die Vinylalkoholeinheiten einpolymerisiert enthalten, haben vorzugsweise mittlere Molmassen von 1000 bis 80000. Die als Komponente (a) in Betracht kommenden Polyester haben vorzugsweise K-Werte von 8 bis 100 (bestimmt nach H. Fikentscher in 1 gew.-%iger wäßriger Lösung am Natriumsalz bei pH 7 und 25°C).

Die als Verbindungen (a) in Betracht kommenden Stoffe enthalten die Struktur (I) oder (II) mindestens einmal. Bevorzugt eingesetzte Verbindungen der Gruppe (a) sind Kondensationsprodukte aus Zitronensäure und Weinsäure gemäß der EP-A-0 483 606 oder Veresterungsprodukte von Zitronensäure, Äpfelsäure, Weinsäure oder Iminodiessigsäure mit Polyhydroxyverbindungen aus der Gruppe Glycerin, Sorbit, Polyvinylalkohol, Mono-, Oligo- oder Polysaccharide.

Als Verbindungen der Gruppe (b) kommen Aldehyde, Ketone, Aldehyd- oder Ketocarbonsäuren in Betracht. Geeignete Aldehyde sind beispielsweise Formaldehyd, Acetaldehyd, Propionaldehyd, n-Butyraldehyd, Isobutyraldehyd, Glyoxal, Glutardialdehyd, Benzaldehyd und Salicylaldehyd. Ketone sind beispielsweise Aceton, Methylethylketon, Diethylketon und Cyclohexanon. Als Aldehydcarbonsäure wird vorzugsweise Glyoxylsäure verwendet. Geeignete Ketocarbonsäuren sind beispielsweise Brenztraubensäure, Mesoxalsäure, Oxalessigsäure, Ketoglutarsäure und Acetondicarbonsäure. Von den Verbindungen der Gruppe (b) werden bevorzugt Glyoxylsäure, Mesoxalsäure, Formaldehyd, Acetaldehyd und Glyoxal eingesetzt. Formaldehyd kann gasförmig, als Feststoff in Form von Polyformaldehyd oder auch in flüssiger Form, nämlich Trioxan, oder in Form anderer Verbindungen, die unter den Reaktionsbedingungen Formaldehyd bilden, eingesetzt werden.

Die Herstellung der Acetallactone erfolgt in bekannter Weise durch Umsetzung der Verbindungen der Gruppe (a) mit den Verbindungen der Gruppe (b). Wie oben bereits zum Stand der Technik ausgeführt ist, sind die meisten niedrig-molekularen Acetallactone bekannt, z.B. die Umsetzungsprodukte aus Zitronensäure und Formaldehyd bzw. aus Zitronensäure und Glyoxylsäure. Die Umsetzung der oben unter (a) und (b) angegebenen Verbindungen erfolgt dabei in Gegenwart oder in Abwesenheit von inerten Verdünnungsmitteln bei Temperaturen von 70 bis 190, vorzugsweise 90 bis 170°C. Als Verdünnungsmittel kann man beispielsweise aliphatische oder aromatische Kohlenwasserstoff, gegebenenfalls im Gemisch mit aprotischen polaren Lösemitteln wie Dioxan, Ethylenglycoldimethylether oder N-Methylpyrrolidon einsetzen. Die Kondensation der Verbindungen (a) und (b) kann ggf. in Gegenwart von sauren Katalysatoren, wie p-Toluolsulfonsäure, Benzolsulfonsäure oder Alkylsulfonsäuren vorgenommen werden. Die Verbindungen (a) und (b) können jedoch bei einer Auswahl geeigneter Kombinationen auch in Substanz umgesetzt werden, wobei man das bei der Reaktion entstehende Wasser vorzugsweise unter vermindertem Druck aus dem Reaktionsgemisch abdestilliert. Acetallacton enthaltende Polykondensate von Glyoxal und Hydroxycarbonsäuren bilden sich nur in Abwesenheit saurer Katalysatoren bei Temperaturen oberhalb 100°C und unterscheiden sich daher von bekannten, in EP 033100 B1 beschriebenen Polyacetalen aus Weinsäure und Glyoxal. Bezogen auf die Strukturen (I) oder (II) der Verbindungen (a) setzt man bei der Kondensation mindestens 1 Mol einer Verbindung der Gruppe (b) ein. Die Komponente (b) kann in einigen Fällen bei der Kondensation im Überschuß eingesetzt werden. Sie wirkt hierbei als Lösemittel und wird nach Beendigung der Umsetzung zurückgewonnen.

Die im folgenden beschriebenen Acetallactonstrukturen enthaltenden Kondensationsprodukte sind neue Stoffe. Sie sind dadurch erhältlich, daß man Kondensationsprodukte mit einem K-Wert von 8 bis 100 (bestimmt nach H. Fikentscher in 1 %iger wäßriger Lösung bei pH 7 am Natriumsalz und 25°C) aus (a) mehrbasischen Hydroxycarbonsäuren oder mehrbasischen sekundären Aminocarbonsäuren mit Polyhydroxyverbindungen mit (b) Aldehyden, Ketonen, Aldehyd- oder Ketocarbonsäuren umsetzt. Der K-Wert der Acetallactonstrukturen enthaltenden Kondensationsprodukte entspricht im wesentlichen dem K-Wert der Kondensationsprodukte aus Polyhydroxyverbindungen und Hydroxycarbonsäuren oder sekundären Aminocarbonsäuren. Bei der Umsetzung von Polyvinylcitrat mit Glyoxylsäure als Komponente (b) erhält man beispielsweise Acetallactone der folgenden Struktur

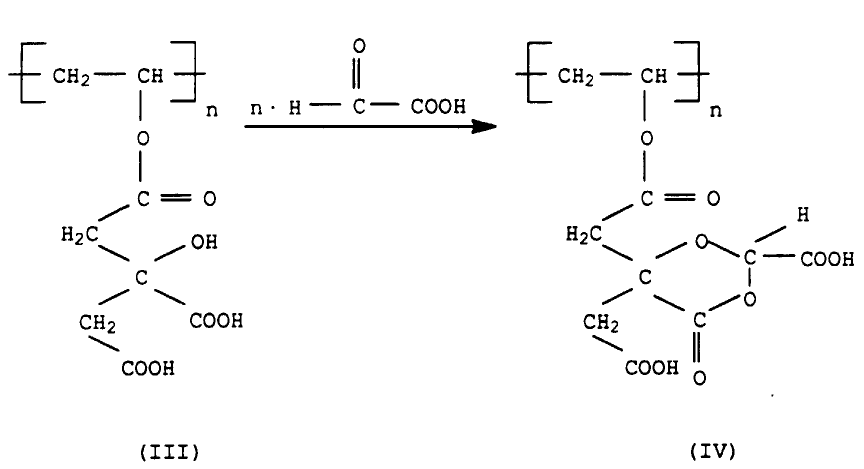

Die Umsetzung von Polyestern der Formel V aus Zitronensäure und Glykol mit Glyoxylsäure ergibt Acetallactongruppen aufweisende Polyester der Formel VI.

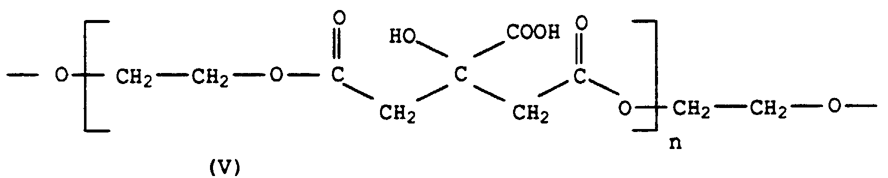

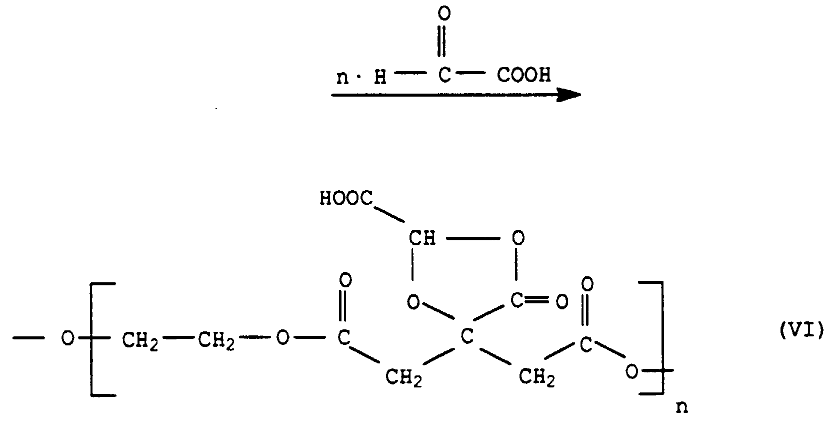

Die Kondensation kann in der Schmelze erfolgen, wobei beispielsweise eine Mischung der Hydroxycarbonsäure mit einer der obengenannten Verbindungen der Gruppe (b), ggf. unter Zusatz von Wasser hergestellt und bei Temperaturen von 60 bis 180°C entwässert wird. Die Kondensation kann unter erhöhtem Druck, unter Normaldruck oder unter vermindertem Druck durchgeführt werden. Sofern man unter Normaldruck arbeitet, wird die Kondensation vorzugsweise unter einem Inertgasstrom durchgeführt. Bei Einsatz von flüchtigen Aldehyden oder Ketonen kann man diese Verbindungen auch im Überschuß einsetzen, zurückgewinnen und für die gleiche Umsetzung wiederverwenden. Die Kondensation kann in vielen Fällen ohne Zusatz von Katalysatoren erfolgen. Der Zusatz von sauren Veresterungskatalysatoren wie beispielsweise Benzolsulfonsäure, Schwefelsäure, Phosphorsäure, p-Toluolsulfonsäure oder von Lewissäuren wie Zinkchlorid, kann von Vorteil sein. Man kann selbstverständlich auch die Reihenfolge der Kondensation vertauschen, d. h. zunächst ein niedermolekulares Acetallacton aus einer mehrbasischen Hydroxycarbonsäure und einem Aldehyd bzw. Keton herstellen und dieses dann mit der Polyhydroxyverbindung weiter umsetzen. Besonders geeignet für diese Art der Reaktionsführung sind die Anhydride der Acetallactone von Citronensäure oder Isocitronensäure, die aus den freien Carbonsäuregruppen enthaltenden Acetallactonen durch Wasserabspaltung mit Acetanhydrid erhältlich sind. Eine Kontrolle des Umsatzes ist durch Bestimmung der Kondensatmenge oder zum Beispiel mit Hilfe der Chromatrographie von Proben möglich, die dem Reaktionsgemisch entnommen werden. Man erhält viskose Harze oder spröde glasige Festprodukte, die ggf. mit wäßrigen Basen in die Salze überführt werden können. Je nach Substitutionsmuster sind die erhältlichen Kondensate beim Lösen in Wasser unterschiedlich stabil. Im stark sauren pH-Bereich werden die Verbindungen in der Regel hydrolytisch in die Ausgangsverbindungen zurückgespalten. Im alkalischen pH-Bereich werden die cyclischen Acetallactone bzw. N,O-Acetallactone teilweise oder vollständig zu den acyclischen Halbacetalen aufgespalten, die je nach Struktur unterschiedlich stabil sind.

Die Kondensation kann auch in Suspension in einem inerten organischen Lösemittel wie beispielsweise Benzol, Toluol oder Xylol oder Paraffinkohlenwasserstoffen erfolgen, wobei das Kondensationswasser dann vorzugsweise azeotrop aus dem Reaktionsgemisch entfernt wird. Um bei dieser Verfahrensweise ein Verklumpen zu verhindern, kann es vorteilhaft sein, die Umsetzung in Gegenwart eines Schutzkolloids, z.B. Polyvinylether, durchzuführen. Als Komponente (a) für die Herstellung der neuen Stoffe kommen die oben unter (a) angegebenen Hydroxycarbonsäuren oder sekundären Aminocarbonsäuren in Betracht. Als Polyhydroxyverbindungen können sämtliche oben beschriebenen Polyhydroxyverbindungen eingesetzt werden, bevorzugt sind beispielsweise Glycol, Glycerin, Oliogoglycerin, Sorbit, Pentaerythrit, Polyethylenglykole, Mono-, Oligo- und Polysaccharide und Polyvinylalkohol.

Die Polysaccharide können pflanzlichen oder tierischen Ursprungs sein oder aus dem Stoffwechsel von Mikroorganismen stammen. Diese Produkte können in nativer Form oder in modifizierter Form als Einsatzstoffe zur Herstellung der Komponente (a) eingesetzt werden. Geeignete Polysaccharide sind beispielsweise Stärke, Cellulose, Pektin, Algin, Chitin, Chitosan, Dextrin, Cyclodextrin, Alginsäuren, Heparin, Carraageenan, Agar, Gummiarabicum, Tragant, Carraja-Gummi, Ghatti-Gummi, Johannisbrotkernmehl, Gua-Gummi, Tara-Gummi, Inulin, Xanthan, Dextran, Nigeran und Pentosane wie Xylan und Araban. Vom wirtschaftlichen Standpunkt aus gesehen verwendet man als Einsatzstoffe zur Herstellung der Komponente (a) vorzugsweise native Stärke oder eine modifizierte Stärke. An modifizierten Stärken sind einsetzbar, z.B. thermisch und/oder mechanisch behandelte Stärke, oxidativ, hydrolytisch oder enzymatisch abgebaute Stärken, oxidierte hydrolytisch oder oxidierte enzymatisch abgebaute Stärken sowie chemisch modifizierte Stärken.

Alle in der Natur vorkommenden Stärken sind geeignet. Bevorzugt werden jedoch Stärken aus Mais, Weizen, Reis, Tapioka und aus Kartoffeln. Die Stärken sind praktisch nicht in Wasser löslich, können jedoch in bekannter Weise durch thermische und/oder mechanische Behandlung oder durch einen enzymatischen oder einen säurekatalysierten teilweisen Abbau in eine wasserlösliche oder wasserdispergierbare Form überführt werden. Stärkeabbauprodukte, die durch einen oxidativen, hydrolytischen oder enzymatischen teilweisen Abbau von nativer Stärke erhältlich sind, sind beispielsweise Dextrine, wie Weiß- und Gelbdextrine sowie Maltodextrine und Cylodextrine. Als ein Reaktionspartner zur Herstellung der Komponente (a) eignen sich auch oxidierte Stärken, wie Dialdehydstärke und oxidierte Stärkeabbauprodukte vorzugsweise mit einem Gehalt von mindestens 20 % an Polysacchariden mit mindestens fünf Monosaccharideinheiten im Molekül. Solche Verbindungen können beispielsweise durch Oxidation von Stärke mit Perjodat, Chromsäure, Wasserstoffperoxid, Stickstoffdioxid, Stickstofftetroxid, Salpetersäure oder Hypochlorit erhalten werden.

Zur Herstellung der Komponente a) eignen sich außerdem die Umstzungsprodukte von Hydroxycarbonsäuren oder sekundären Aminocarbonsäuren mit chemisch modifizierten Polysacchariden, insbesondere chemisch modifizierte Stärken, z.B. mit Säuren zu Estern und mit Alkoholen zu Ethern teilweise umgesetzte Stärken und Stärketeilabbauprodukte. Die Veresterung dieser Stoffe ist sowohl mit anorganischen als auch mit einbasischen organischen Säuren, deren Anhydriden oder Chloriden möglich. Bei direkter Veresterung bewirkt das freigesetzte Wasser eine säurekatalysierte Spaltung glykosidischer Bindungen. Von besonderem technischen Interesse sind phosphatierte und acetylierte Stärken und Stärkeabbauprodukte. Die gängigste Methode zur Veretherung von Stärke ist die Behandlung der Stärke und der Stärkeabbauprodukte mit organischen Halogenverbindungen, Epoxiden oder Alkylsulfaten in wäßrig alkalischer Lösung. Stärkeether sind beispielsweise Mono- und Dialkylether, Hydroxyalkylether, Carboxyalkylether und Allylether von Stärke.

Zu chemisch modifizierten Polysacchariden gehören beispielsweise auch Acetylcellulose, Carboxymethylcellulose, Hydroxypropylcellulose, Carboxymethylhydroxyethylcellulose, Sulfoethylcellulose, Carboxymethylsulfoethylcellulose, Hydroxypropylsulfoethylcellulose, Hydroxyethylesulfoethylcellulose und Ethylsulfoethylcellulose.

Verbindungen der Komponente a) sind auch durch Umsetzung von Hydroxycarbonsäuren oder von sekundären Aminocarbonsäuren mit Polyvinylalkoholen erhältlich, wobei sämtliche wasserlösliche Polyvinylalkohole in Betracht kommen. Sie haben im allgemeinen Viskositäten von 3 bis 10.000, vorzugsweise 10 bis 5.000 mPas (bestimmt in 10%iger Lösung bei 20°C mit einem Höppler Kugelfall-Viskosimeter nach DIN 53 015). Die Polyvinylalkohole werden üblicherweise durch Hydrolyse von Polyvinylacetat hergestellt. Sie können in teilweise oder vollständig hydrolysierter Form vorliegen. Beispielsweise beträgt der Hydrolysegrad im allgemeinen 70 bis 100, vorzugsweise 85 bis 99 %. Man kann auch oxidativ abgebaute Polyvinylalkohole als einen Reaktionspartner zur Herstellung der Verbindungen der Komponente a) einsetzen. Solche abgebauten Polyvinylalkohole haben Molmassen von 500 bis 50.000.

Bevorzugt eingesetzte Reaktionspartner zur Herstellung der Verbindungen der Komponenten a) sind von den Polyhydroxyverbindungen Stärke, Dextrine und Polyvinylakohole.

Die so erhältlichen Acetallactonstrukturen aufweisenden Kondensationsprodukte haben K-Werte von 8 bis 100 (bestimmt nach H. Fikentscher in 1 gew.-%iger wäßriger Lösung bei pH 7 am Na-Salz und 25°C).

Neue Acetallactonstrukturen enthaltende Kondensationsprodukte werden auch erhalten, indem man
a) Hydroxycarbonsäuren oder sekundäre Aminocarbonsäuren oder deren Mischungen mit
b) Glyoxal oder Mischungen von Glyoxal mit anderen Aldehyden, Ketonen, Aldehydcarbonsäuren oder Ketocarbonsäuren, die mindestens 10 Mol% Glyoxal enthalten
in Abwesenheit saurer Katalysatoren bei Temperaturen oberhalb 100°C kondensiert. Bei der Umsetzung von Citronensäure mit Glyoxal erhält man beispielsweise Acetallactone der Struktur VII 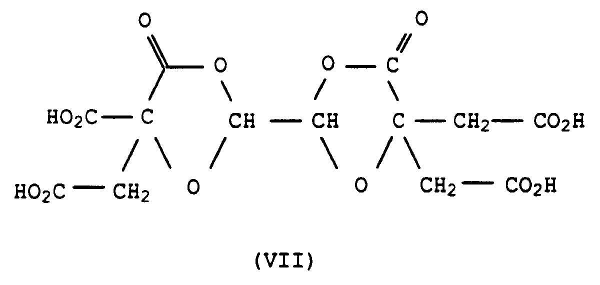 als Hauptkomponente neben isomeren und höhermolekularen Kondensationsprodukten. Aus Weinsäure und Glyoxal erhält man auf gleichem Wege Polyacetallactone. Die Acetallactone sind relativ hydrolysestabile Verbindungen und eignen sich vorzugsweise in Form ihrer Salze als dispergierende oder die Bildung von Verkrustungen durch unlösliche anorganische oder organische Salze verhindernde Zusätze (Inkrustationsinhibitoren) zu Wasch- und Reinigungsmitteln.

Sowohl die bekannten Acetallactone als auch die oben beschriebenen neuen Acetallactonstrukturen enthaltenden Kondensationsprodukte werden gemäß der Erfindung in einer weiteren Reaktion mit den Verbindungen der Gruppe (c) Aminocarbonsäuren, primären oder sekundären Aminen und/oder Polyethyleniminen in wäßrigem Medium im alkalischen pH-Bereich zu N,O-Acetal- oder Carbonamidstrukturen enthaltenden Kondensationsprodukten gespalten. So entstehen beispielsweise bei der Einwirkung von Iminodiessigsäure auf das Acetallacton aus Zitronensäure und Glyoxylsäure das Amid VIII und das N,O-Acetal der Formel IX:

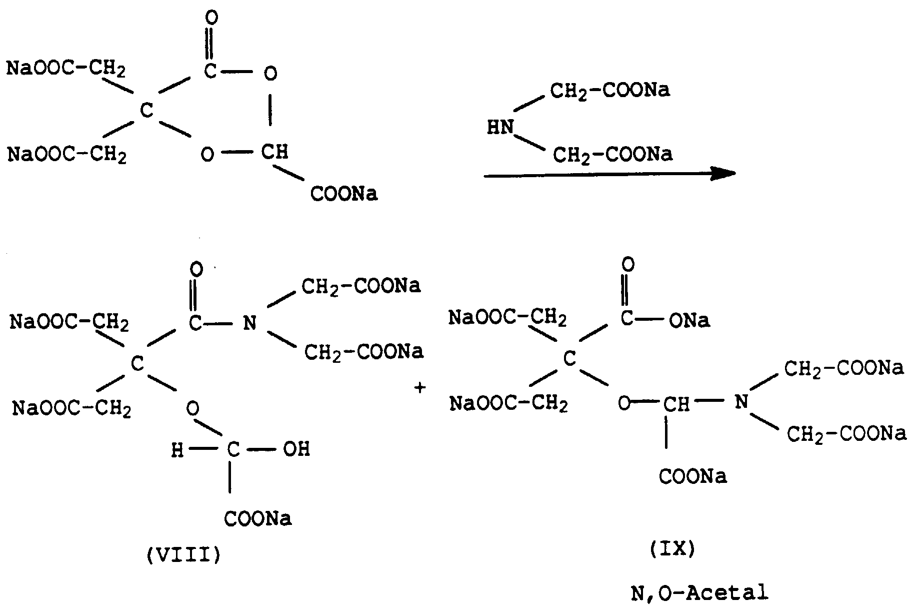

Die primär gebildeten Amide oder N,O-Acetale können teilweise Folgereaktionen eingehen. So lassen sich aus den Säureamiden des Strukturtpyps VIII unter Abspaltung des Aldehyds bzw. Ketons die Säureamide der zugrundeliegenden Hydroxycarbonsäuren a) mit den Aminen c) selektiv erhalten. Amide oder N,O-Acetale, die mit primären Aminen c) erhalten wurden lassen sich auch zu den entsprechenden Oxazolonen cyclisieren.

Als Verbindungen der Komponente (c) können Aminosäuren verwendet werden, beispielsweise Glycin, Alanin, Valin, Leucin, Asparaginsäure, Glutaminsäure, Iminodiessigsäure, Iminodipropionsäure, N-Methylasparaginsäure, N-Methylglutaminsäure, Lysin und Arginin. Außerdem eignen sich beispielsweise Carboxymethylethylendiamin sowie primäre oder sekundäre Amine, z.B. C₁- bis C₁₀-Alkylamine, z.B. Methylamin, Ethylamin, Propylamin, Diethylamin, Dimethylamin, Butylamin, Dibutylamin und Hexylamin sowie Aminozucker, Glucosamin und Aminosorbit. Außerdem eignen sich Diamine, wie Ethylendiamin, Propylendiamin, Diaminobutan und an den Endgruppen aminierte Polyalkylenoxide und Polyamine, wie Diethylentriamin, Triethylentetramin, Polyethylenimine, Polyvinylamine, und Vinylamineinheiten enthaltende Copolymere oder Chitosan. Bevorzugte Verbindungen der Gruppe (c) sind Glycin, Alanin, Asparaginsäure, Glutaminsäure und Iminodiessigsäure.

Die Umsetzung der Acetallactone mit den Verbindungen der Gruppe (c) erfolgt im alkalischen Bereich, vorzugsweise bei pH-Werten von 8 bis 12. Im Falle der Umsetzung mit Aminosäuren als Komponente (c) kann es vorteilhaft sein, die Aminosäuren vorher zu neutralisieren und auf den gewünschten pH-Wert einzustellen. Die Umsetzung erfolgt vorzugsweise in wäßriger Lösung. Sie kann auch in Mischungen aus Wasser mit Wasser mischbaren Lösemitteln erfolgen. In den Fällen, in denen das Acetallacton und das Amin der Komponente (c) keine freien Carboxylgruppen enthalten, kann die Reaktion auch in wasserfreien Lösemitteln durchgeführt werden. Außerdem ist es möglich, die Umsetzung in Abwesenheit von Lösemitteln durchzuführen.

Die oben beschriebenen N,O-Acetal- oder Carbonamidstrukturen enthaltenden Kondensationsprodukte werden als Zusatz zu phosphatarmen und phosphatfreien Wasch- und Reinigungsmitteln verwendet. Sie werden dazu vorzugsweise vor der Herstellung der Waschmittelformulierungen mit Alkalimetallbasen, Ammoniak oder Aminen neutralisiert. Geeignete Basen sind vor allem Natronlauge, Kalilauge, Soda, Natriumhydrogencarbonat, Kaliumcarbonat, Kaliumhydrogencarbonat, Ammoniak, Ethanolamin, Diethanolamin, Triethanolamin, Hydroxylamin, Triethylamin, Tributylamin und Hexylamin. Die erfindungsgemäßen Produkte werden in der Waschmittelformulierung in Mengen von 0,5 bis 20, vorzugsweise 3 bis 15 Gew.-% eingesetzt. Sie wirken als Builder, dispergieren den Schmutz in der Waschmittelflotte und vermindern die Inkrustation. Insbesondere Strukturen, die eine hohe Carboxylgruppendichte haben, z.B. die Verbindungen der Formeln VII, VIII und IX wirken als Inkrustationsinhibitoren. Unter phosphatarmen Waschmitteln sollen solche Waschmittel formulierungen verstanden werden, die nicht mehr als 25 Gew.-% Natriumtriphosphat enthalten.

Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Wasch-und Reinigungsmittelformulierungen. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch dargestellt. Weitere Angaben über die Zusammensetzung von Wasch- und Reinigungsmitteln können der WO-A-90/13581 sowie Ullmanns Encyclopädie der technischen Chemie, Verlag Chemie, Weinhein 1983, 4. Auflage, Seiten 63-160 entnommen werden. Außerdem sind solche Waschmittelformulierungen von Interesse, die bis zu 60 Gew.-% eines Alkalisilikats und bis zu 10 Gew.-% eines erfindungsgemäß hergestellten Polykondensats enthalten. Als Alkalisilikate kommen beispielsweise die amorphen Natriumdisilikate in Betracht, die in der EP-A-0 444 415 beschrieben werden, sowie kristalline Schichtsilikate, die gemäß der EP-A-0 337 219 in Waschmittelformulierungen als Builder enthalten sind und gemäß der EP-B-0 164 514 zur Enthärtung von Wasser verwendet werden, und Natriumsilikate, die durch Entwässern von Natriumsilikatlösungen und Trocknen bis zu Wassergehalten von 15 bis 23, vorzugsweise 18 bis 20 Gew.-% erhältlich sind.

Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren.

Die K-Werte der Kondensate wurden nach H. Fikentscher, Cellulosechemie, Band 13, 58 bis 64 und 71 bis 74 (1932) in wäßriger Lösung bei einer Temperatur von 25°C und einer Konzentration von 1 Gew.-% bei pH 7 am Natriumsalz der Kondensate bestimmt. Die %-Angaben in den Beispielen bedeuten Gew.-%.

Die Acetallacton enthaltenden Kondensationsprodukte lassen sich anhand ihrer Infrarot-Spektren charakterisieren; sie zeigen eine charakteristische Schwingungsbande bei 1802-1835 cm⁻¹, die weder die Edukte noch rein acetalische Strukturen zeigen. Daneben sind die Signale im ¹H-NMR- und ¹³C-NMR-Spektrum für das aus dem Aldehyd stammende CH bzw. das aus dem Keton stammende C charakteristisch. Durch die Umsetzung mit der Komponente c) erhält man Säureamide, die den Aldehyd bzw. das Keton halbacetalisch gebunden enthalten und N,O-Acetale sowie aus diesen primären Reaktionsprodukten durch Hydrolyse oder Cyclisierung gebildete Folgeprodukte. Säureamide und N,O-Acetale treten in der Regel beide auf, wobei das Verhältnis der Produkte stark von den anwesenden Kationen und den Reaktionsbedingungen abhängt. Die Acetal-Bindungen im Säureamid oder N,O-Acetal werden je nach den umgebenden Bedingungen mehr oder weniger rasch hydrolytisch gespalten. Die Reaktionsprodukte lassen sich durch gängige analytische Methoden gegebenenfalls nach chromatographischer Probenvorbereitung charakterisieren. Besonders geeignet sind hierfür ¹H-NMR-, ¹³C-NMR- und Infrarotspektren.

### Beispiel 1

4,96 g des in der US-A-3 763 189 beschriebenen Acetallactons aus Citronensäure und Glyoxylsäure(Säureform) werden zusammen mit 3,0 g Glycin bei Raumtemperatur in 15 ml Wasser gelöst und innerhalb von 20 min bei Raumtemperatur unter Kühlung mit einem Eisbad 50 %ige NaOH (in Wasser) unter Rühren zudosiert bis ein pH-Wert von 10 erreicht ist. Die Lösung wird 24 Stunden bei Raumtemperatur gehalten. Zur Gewinnung des Festproduktes wird die Lösung gefriergetrocknet; man erhält ein blassgelbes amorphes Festprodukt, das als Hauptkomponente das Citronensäureamid VIII neben dem daraus durch Abspaltung der Glyoxylatgruppe gebildeten Amid aus Citronensäure und Iminodiessigsäure und dem N,O-Acetal IX enthält.

### Beispiel 2

4,96 g des in der US-A-3 763 189 beschriebenen Acetallactons aus Citronensäure und Glyoxylsäure (Säureform) werden zusammen mit 2,93 g Iminodiessigsäure bei Raumtemperatur in 15 ml Wasser gelöst und innerhalb 20 min. bei Raumtemperatur unter Kühlung mit einem Eisbad 50 %ige NaOH (in Wasser) unter Rühren zudosiert bis ein pH-Wert von 10 erreicht ist. Die Lösung wird 24 h auf 50°C erwärmt. Zur Gewinnung des Festproduktes wird die Lösung gefriergetrocknet; man erhält ein farbloses amorphes Festprodukt, das als Hauptkomponente das Citronensäureamid VIII neben dem daraus durch Abspaltung der Glyoxylatgruppe gebildeten Amid aus Citronensäure und Iminodiessigsäure und dem N,O-Acetal IX enthält.

### Beispiel 3

4,96 g des cyclischen Acetallactons aus Citronensäure und Glyoxylsäure werden zusammen mit 0,88 g Diaminobutan bei Raumtemperatur vorgelegt und unter Kühlung mit einem Eisbad 50 %ige NaOH (in Wasser) unter Rühren zudosiert bis ein pH-Wert von 10 erreicht ist. Die Lösung wird 24 h bei Raumtemperatur gehalten. Zur Gewinnung des Festproduktes wird die Lösung gefriergetrocknet; man erhält ein farbloses amorphes Festprodukt, das aus einem Gemisch verschiedener Bisadditionsprodukte des Acetallactons an die Aminogruppen des Diamids besteht. Vorwiegend werden dabei Citronensäureamid-Strukturen erhalten.

### Beispiel 4

Das Beispiel 3 wird wiederholt, wobei statt Diaminobutan 0,80 g Triethylentetramin eingesetzt wird. Man erhält ein farbloses amorphes Festprodukt, das aus einem Gemisch verschiedener Bisadditionsprodukte des Acetallactons an die Aminogruppen des Diamids besteht. Vorwiegend werden dabei Citronensäureamid-Strukturen erhalten.

### Beispiel 5

Aus Weinsäure und Glyoxylsäure wird ein Bisacetallacton gemäß US-A-3 989 637 hergestellt. 10 g des Bisacetallactons werden wie in Beispiel 2 mit 11,2 g Iminodiessigsäure umgesetzt. Man erhält nach Gefriertrocknung ein farbloses amorphes Festprodukt, das aus einem Gemisch verschiedener Bisadditionsprodukte der Aminosäure an das Bisacetallacton besteht. Vorwiegend werden dabei Citronensäureamid-Strukturen erhalten.

### Beispiel 6

Das Beispiel 5 wird wiederholt, wobei 11,2 g Asparaginsäure statt Iminodiessigsäure verwendet wird. Man erhält ein farbloses amorphes Festprodukt, das aus einem Gemisch verschiedener Bisadditionsprodukte der Aminosäure an das Bisacetallacton besteht. Vorwiegend werden dabei Citronensäureamid-Strukturen erhalten.

### Beispiel 7

Das Beispiel 5 wird wiederholt, wobei statt Iminodiessigsäure 12,4 g Glutaminsäure verwendet wird. Man erhält ein farbloses amorphes Festprodukt, das aus einem Gemisch verschiedener Bisadditionsprodukte der Aminosäure an das Bisacetallacton besteht. Vorwiegend werden dabei Citronensäureamid-Strukturen erhalten.

### Beispiel 8

Aus Citronensäure und Weinsäure wird zunächst gemäß der Lehre der EP-A-0 483 606 ein Polykondensat im Molverhältnis 1:1 mit einer mittleren Molmasse Mₙ = 1200 D hergestellt. 100 g dieses Polykondensats werden mit 41,1 g 50 %iger Glyoxylsäure und 50 g Wasser kalt gelöst und unter Rühren und Abdestillieren des Wassers im Vakuum bei 100°C kondensiert. Im Zuge der Kondensation wird der Druck von 800 mbar auf 20 mbar reduziert. Bei 20 mbar wird weitere 8 h kondensiert. Man erhält das Polykondensat als gelbliches spröde erstarrendes Harz. 10 g des Polyacetallactons werden in 10 ml Wasser gelöst. Parallel werden 3,5 g Glycin in 15 ml Wasser gelöst und beide Lösungen mit NaOH auf pH 10 gestellt. Die Lösungen werden vereinigt und 24 h bei Raumtemperatur gehalten. Durch Gefriertrocknung erhält man ein amorphes gelbliches Festprodukt, das aus einem Citronensäure-Weinsäure-Polyester mit Säureamid- bzw. N,O-Acetalstrukturen besteht.

### Beispiel 9

Man stellt zunächst ein Stärkecitrat mit 30 % Veresterungsgrad der OH-Gruppen her, indem man hydroxypropylierte Kartoffelstärke mit Citronensäure, die zu 17 % neutralisiert wird, bei einer Temperatur von 130°C unter Abdestillieren von Wasser verestert. Pro Mol Anhydroglucoseeinheit werden 5 Mol Citronensäure eingesetzt. 50 g des so erhältlichen Polyesters in der Säureform werden zur Abtrennung der überschüssigen Citronensäure mit 200 ml Methanol bei Raumtemperatur 2 h gerührt und filtriert. Der farblose Rückstand wird mit Methanol nachgewaschen und bei Raumtemperatur im Vakuum getrocknet.

10 g des so erhaltenen Stärkecitrats werden in einer Mischung aus 7,6 g 50 %iger Glyoxylsäure und 10 ml Wasser bei Raumtemperatur gelöst. Die Lösung wird dann zum Sieden erhitzt und das Wasser abdestilliert. Im Verlauf der Kondensation wird der Druck von 800 mbar auf 20 mbar reduziert. Die Kondensation wird bei 100°C und 20 mbar im Verlauf von 8 h durchgeführt. Man erhält ein blassgelbes schaumiges Harz, das abgekühlt und in 40 ml Wasser bei 10°C gelöst wird. Zu der Lösung fügt man 3,8 g Glycin und bei Raumtemperatur unter Kühlung mit einem Eisbad soviel einer 50 %igen Natronlauge zu, bis das Reaktionsgemisch einen pH-Wert von 10,5 erreicht hat. Die Lösung wird 24 h bei Raumtemperatur gehalten. Zur Gewinnung des Festproduktes wird sie gefriergetrocknet. Man erhält ein farbloses amorphes Produkt, das aus einem Stärkecitrat mit Säureamid- bzw. N,O-Acetalstrukturen an den Citratsubstituenten besteht.

### Beispiel 10

Aus Sorbit und Citronensäure wird das in DE-B 2 147 778 beschriebene Sobithexacitrat hergestellt. 10 g dieses Polykondensats werden mit 11 g 50 %iger Glyoxylsäure und 10 g Wasser kalt gelöst und unter Rühren und Abdestillieren des Wassers im Vakuum bei 100°C kondensiert. Im Zuge der Kondensation wird der Druck von 800 mbar auf 20 mbar reduziert. Bei 20 mbar wird weitere 8 h kondensiert. Das erhältliche gelbliche Harz wird abgekühlt und in 40 ml Wasser bei 10°C gelöst. Zu der Lösung wird 7,2 g Iminodiessigsäure gegeben und bei Raumtemperatur unter Kühlung mit einem Eisbad 50 %ige NaOH (in Wasser) zudosiert bis ein pH-Wert von 10,5 erreicht ist. Die Lösung wird 24 h auf 50°C erwärmt. Zur Gewinnung des Festproduktes wird die Lösung gefriergetrocknet. Man erhält ein blassgelbes amorphes Festprodukt, das aus einem Sorbitcitrat mit Säureamid- bzw. N,O-Acetalstrukturen an den Citratsubstituenten besteht.

### Beispiel 11

Das cyclische Acetallacton aus Citronensäure und Formaldehyd wird nach den Angaben in Chem. Zentralblatt 1902, I, S. 300 hergestellt. 4,08 g des Lactons wird wie in Beispiel 1 mit Glycin und 6,4 g 50 %iger NaOH umgesetzt. Man erhält ein farbloses amorphes Festprodukt, das als Hauptkomponenten das Citronensäureamid analog Struktur VIII bzw. das daraus durch Abspaltung von Glyoxylat gebildete Amid enthält.

### Beispiel 12

Aus Weinsäure und Glyoxal wird zunächst ein Acetallactongruppen enthaltendes Polykondensat hergestellt. 150 g Weinsäure werden hierzu in einem 2 1 Rundkolben in 5 Portionen mit 348 g 20 %iger Glyoxallösung versetzt und nach jedem Zusatz das Wasser im Vakuum abdestilliert, wobei die Temperatur jeweils von 40°C auf 130°C erhöht und das Vakuum von 200 mbar auf 10 mbar vermindert wird. Am Ende der Reaktion wird noch 4 h bei 160°C/10 mbar nachkondensiert.
17 g des spröden amorphen Festprodukts werden zusammen mit 7,5 g Glycin bei 10°C unter Zugabe von 10 %iger NaOH bei pH 10 in Wasser gelöst und 24 h bei Raumtemperatur gehalten. Zur Gewinnung des Festprodukts wird gefriergetrocknet; man erhält ein blassgelbes amorphes Festprodukt, das aus oligomeren N,O-Acetalen und Carbonsäureamidstrukturen enthaltenden Halbacetalen sowie daraus durch teilweise Hydrolyse erhaltenen Weinsäureamiden mit Glycin besteht.

### Beispiel 13

Analog Beispiel 12 wird aus 210 g Citronensäure-Monohydrat und 348 g 20 %igem Glyoxal ein Acetallactongruppen enthaltendes Kondensationsprodukt hergestellt, wobei die Nachkondensation 2 h bei 130°C/10 mbar erfolgt. 22,1 g des spröden amorphen Festprodukts wurden zusammen mit 13,3 g Iminodiessigsäure bei 10°C unter Zugabe von 10 %iger NaOH bei pH 10 in Wasser suspendiert und 12 h bei 50°C gehalten. Zur Gewinnung des Festproduktes wird gefriergetrocknet; man erhält ein farbloses amorphes Festprodukt, das aus di- und oligomeren N,O-Acetalen und Carbonsäureamid-Strukturen enthaltenden Halbacetalen sowie daraus durch teilweise Hydrolyse erhaltenem Citronensäureamid mit Iminodiessigsäure besteht.

### Anwendungstechnische Beispiele

### Clay-Dispergierung

Die Entfernung von Partikelschmutz von Gewebeoberflächen wird durch Zusatz von Polyelektrolyten unterstützt. Die Stabilisierung der nach der Ablösung der Partikel von der Gewebeoberfläche entstehenden Dispersion ist eine wichtige Aufgabe dieser Polyelektrolyten. Der stabilisierende Einfluß der anionischen Dispergiermittel ergibt sich dadurch, daß infolge von Adsorption von Dispergiermittelmolekülen auf der Feststoffoberfläche deren Oberflächenladung vergrößert und die Abstoßenergie erhöht wird. Weitere Einflußgrößen auf die Stabilität einer Dispersion sind ferner u.a. sterische Effekte, Temperatur, pH-Wert und die Elektrolytkonzentration.

Mit dem im folgenden beschriebenen Clay-Dispergiertest (CD-Test) kann auf einfache Weise die Dispergierfähigkeit verschiedener Polyelektrolyte beurteilt werden.

### CD-Test

Als Modell für partikulären Schmutz wird feingemahlener China-Clay SPS 151 benutzt. 1 g Clay wird unter Zusatz von 1 ml einer 0,1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60-minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, desto höher sind die gemessenen Trübungswerte und um so stabiler ist die Dispersion. Als zweite physikalische Meßgröße wird die Dispersionskonstante bestimmt, die das zeitliche Verhalten des Sedimentationsprozesses beschreibt. Da der Sedimentationsprozeß annähernd durch ein monoexpotentielles Zeitgesetz beschrieben werden kann, gibt τ die Zeit an, in der die Trübung auf 1/e-tel des Ausgangszustandes zum Zeitpunkt t = O abfällt.

| Beispiel Nr. | Kondensat gemäß Beispiel | Trübung nach Lagerung [NTU] | | | Dispersionskonstante τ [min] |
|---|---|---|---|---|---|
| | | sofort | 30 min | 60 min | |
| 14 | 1 | 760 | 620 | 600 | 501 |
| 15 | 2 | 700 | 550 | 430 | 123 |
| 16 | 5 | 720 | 530 | 460 | 148 |
| 17 | 10 | 750 | 580 | 500 | 155 |
| 18 | 13 | 750 | 590 | 500 | 150 |
| Vergl. Bsp. 1 | - | 600 | 37 | 33 | 41 |

### Calciumcarbonat-Dispergierung

Die Calciumcarbonat-Dispergierkapazität wurde dadurch bestimmt, daß man 1 g des Kondensats in 100 ml destilliertem Wasser löste, bei Bedarf durch Zugabe von 1 m Natronlauge neutral stellte und mit 10 ml 10 %iger Sodalösung versetzte. Die Lösung wurde bei konstantem pH-Wert und konstanter Temperatur anschließend mit 0,25 m Cacliumacetatlösung bis zur Trübung titriert. Der pH-Wert wurd entweder durch Zugabe von verdünnter Natronlauge- oder Salzsäure-Lösung eingestellt. Die Dispergierkapazität wurde bei 20°C und pH 11 bestimmt.

| Beispiel Nr. | Kondensat gemäß Beispiel | Dispergierkapazität [mg CaCO3/g Kondensat] |
|---|---|---|
| 19 | 2 | 95 |
| 20 | 7 | 90 |
| 21 | 10 | 80 |
| 25 | 13 | 75 |
| Vergl. Bsp. 2 | Citronensäure, Na-salz | 55 |

## Patentansprüche

1. N,O-Acetal- oder Carbonamidstrukturen enthaltende Kondensationsprodukte, dadurch gekennzeichnet, daß sie erhältlich sind durch Kondensation von
(a) Verbindungen, die mindestens einmal die Strukturelemente 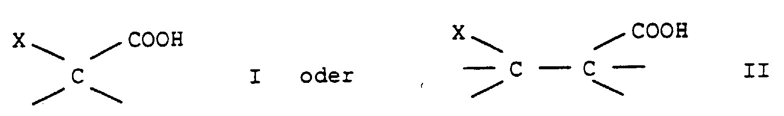 enthalten und in denen X - OH oder NHR und R = C₁- bis C₆-Alkyl oder -(CH₂)ₙ-COOH mit n = 1 -4 bedeuten und die sich von Hydroxycarbonsäuren, sekundären Aminosäuren, Poly-α-hydroxyacrylsäure, Poly-α-hydroxymaleinsäure, verseiften Copolymerisaten aus Vinylestern mit moethylenisch ungesättigten Mono- oder Dicarbonsäuren oder Veresterungsprodukten von mehrbasischen Hydroxycarbonsäuren mit Polyhydroxyverbindungen ableiten, mit
(b) Aldehyden, Ketonen, Aldehyd- oder Ketocarbonsäuren zu Acetallactonen und anschließende
Spaltung der Acetallactone mit
(c) Aminosäuren, Iminodiessigsäure, Iminodipropionsäure, N-Methylasparaginsäure, N-Methylglutaminsäure, primären oder sekundären Aminen, Polyvinylaminen und/oder Polyethyleniminen
zu N,O-Acetal- oder Carbonamidstrukturen enthaltenden Kondensationsprodukten.

2. N,O-Acetal- oder Carbonamidstrukturen enthaltende Kondensationsprodukte nach Anspruch 1, dadurch gekennzeichnet, daß man als Verbindungen (a) Hydroxycarbonsäuren, sekundäre Aminocarbonsäuren oder Polyester aus Hydroxycarbonsäuren oder sekundären Aminocarbonsäuren und Polyhydroxyverbindungen, und als Verbindungen (b) Glyoxylsäure, Mesoxalsäure, Formaldehyd, Glyoxal oder Acetaldehyd einsetzt.

3. Verfahren zur Herstellung von N,O-Acetal- oder Carbonamidstrukturen enthaltenden Kondensationsprodukten nach Anspruch 1 oder 2, dadurch gekennzeichnet, daß man Verbindungen, die mindestens einmal die Strukturelemente 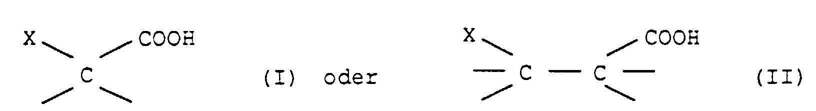 enthalten und in denen X = OH oder NHR und R = C₁- bis C₆-Alkyl oder -(CH₂)ₙ-COOH mit n = 1 - 4 bedeuten und die sich von Hydroxycarbonsäuren, sekundären Aminosäuren, Poly-α-hydroxyacrylsäure, Poly-α-hydroxymaleinsäure, verseiften Copolymerisaten aus Vinylestern mit moethylenisch ungesättigten Mono- oder Dicarbonsäuren oder Veresterungsprodukten von mehrbasischen Hydroxycarbonsäuren mit Polyhydroxyverbindungen ableiten, mit
(b) Aldehyden, Ketonen, Aldehyd- oder Ketocarbonsäuren zu Acetallactonen umsetzt und die Acetallactone anschließend mit
(c) Aminosäuren, Iminodiessigsäure, Iminodipropionsäure, N-Methylasparaginsäure, N-Methylglutaminsäure, primären oder sekundären Aminen, Polyvinylaminen und/oder Polyethyleniminen
in wäßrigem Medium im alkalischen pH-Bereich zu N,O-Acetal- oder Carbonamidstrukturen enthaltenden Kondensationsprodukten spaltet.

4. Verwendung der N,O-Acetal- oder Carbonamidstrukturen enthaltenden Kondensationsprodukte nach Anspruch 1 oder 2 als Zusatz zu phosphatarmen und phosphatfreien Wasch- und Reinigungsmitteln.

## Claims

1. Condensation products that contain N,O-acetal or carboxamide structures, obtainable by condensation of
(a) compounds that contain at least one unit of the structural element 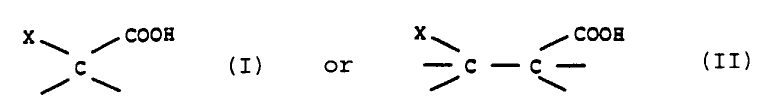 where X is OH or NHR and R is C₁-C₆-alkyl or -(CH₂)ₙ-COOH with n = 1 - 4, and are derived from hydroxycarboxylic acids, secondary amino acids, poly-α-hydroxyacrylic acid, poly-α-hydroxymaleic acid, hydrolyzed copolymers formed from vinyl esters with monoethylenically unsaturated mono- or dicarboxylic acids or esterification products formed from polybasic hydroxycarboxylic acids with polyhydroxy compounds, with
(b) aldehydes, ketones or aldehyde- or keto-carboxylic acids to form acetal-lactones, and subsequent cleavage of the acetal-lactones with
(c) amino acids, iminodiacetic acid, iminodipropionic acid, N-methylaspartic acid, N-methylglutamic acid, primary or secondary amines, polyvinylamines and/or polyethyleneimines.

2. Condensation products as claimed in claim 1, wherefor compounds (a) are selected from hydroxycarboxylic acids, secondary aminocarboxylic acids or polyesters formed from hydroxycarboxylic acids or secondary aminocarboxylic acids and polyhydroxy compounds, and compounds (b) from glyoxylic acid, mesoxalic acid, formaldehyde, glyoxal or acetaldehyde.

3. A process for preparing condensation products as claimed in claim 1 or 2, which comprises reacting compounds that contain at least one unit of the structural element 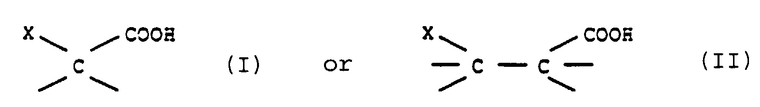 where X is OH or NHR and R is C₁-C₆-alkyl or -(CH₂)-COOH with n = 1 - 4, and are derived from hydroxycarboxylic acids, secondary amino acids, poly-α-hydroxyacrylic acid, poly-α-hydroxymaleic acid, hydrolyzed copolymers formed from vinyl esters with monoethylenically unsaturated mono- or dicarboxylic acids or esterification products formed from polybasic hydroxycarboxylic acids with polyhydroxy compounds, with
(b) aldehydes, ketones or aldehyde- or keto-carboxylic acids to form acetal-lactones, and then cleaving the acetal-lactones with
(c) amino acids, iminodiacetic acid, iminodipropionic acid, N-methylaspartic acid, N-methylglutamic acid, primary or secondary amines, polyvinylamines and/or polyethyleneimines
in an aqueous medium at an alkaline pH.

4. The use of the claim 1 or 2 condensation products that contain N,O-acetal or carboxamide structures as reduced-phosphate or phosphate-free detergent and cleaner additive.

## Revendications

1. Produits de condensation contenant des structures N,O-acétal ou carbonamide, caractérisés en ce qu'ils sont obtenus par condensation de
a) composés qui contiennent au moins une fois les éléments structuraux 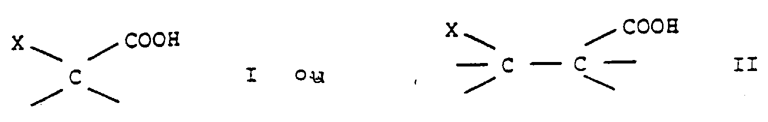 dans lesquels X = OH ou NHR et R = reste alkyle en C₁-C₆ ou -(CH₂)ₙ-COOH avec n = 1 à 4, et qui dérivent d'acides hydroxycarboxyliques, d'aminoacides secondaires, d'acide poly-α-hydroxyacrylique, d'acide poly-α-hydroxymaléique, de copolymères saponifiés d'esters vinyliques et d'acides mono- ou dicarboxyliques à insaturation monoéthylénique, ou de produits d'estérification d'acides hydroxycarboxyliques polybasiques avec des composés polyhydroxylés, avec
b) des aldéhydes, des cétones, des acides aldéhyde- ou cétocarboxyliques,
pour obtenir des acétallactones,
suivie de dissociation des acétallactones avec
c) des acides aminocarboxyliques, l'acide iminodiacétique, l'acide iminodipropionique, l'acide N-méthylasparagique, l'acide N-méthylglutamique, des amines primaires ou secondaires, des polyvinylamines et/ou des polyéthyléneimines,
pour obtenir des produits de condensation contenant des structures N,O-acétal ou carbonamide.

2. Produits de condensation contenant des structures N,O-acétal ou carbonamide selon la revendication 1, caractérisés en ce que l'on utilise, comme composés (a), des acides hydraxycarboxyliques, des acides aminocarboxyliques secondaires ou des polyesters d'acides hydroxycarboxyliques ou d'acides aminocarboxyliques secondaires et de composés polyhydroxylés et, comme composés (b), de l'acide glyoxylique, de l'acide mésoxalique, du formaldéhyde, du glyoxal ou de l'acétaldéhyde.

3. Procédé de préparation de produits de condensation contenant des structures N,O-acétal ou carbonamide selon la revendication 1 ou 2, caractérisé en ce que l'on fait réagir des composés qui contiennent au moins une fois les éléments structuraux 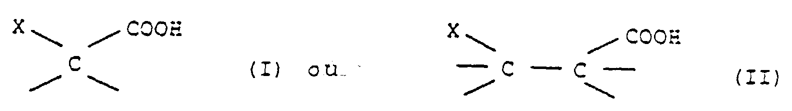 dans lesquels X = OH ou NHR et R = reste alkyle en C₁-C₆ ou -(CH₂)ₙ-COOH avec n = 1 à 4, et qui dérivent d'acides hydroxycarboxyliques, d'aminoacides secondaires, d'acide poly-α-hydroxyacrylique, d'acide poly-α-hydroxymaléique, de copolymères saponifiés d'esters vinyliques et d'acides mono- ou dicarboxyliques à insaturation monoéthylénique, ou de produits d'estérification d'acides hydroxycarboxyliques polybasiques avec des composés polyhydroxylés, avec
b) des aldéhydes, des cétones, des acides aldéhyde- ou cétocarbaxyliques, pour obtenir des acétallactones, puis on dissocie les acétallactones avec
c) des acides aminocarboxyliques, l'acide iminodiacétique, l'acide iminodipropionique, l'acide N-méthylasparagique, l'acide N-méthylglutamique, des amines primaires ou secondaires, des polyvinylamines et/ou des polyéthylèneimines,
en milieu aqueux dans la gamme alcaline du pH, pour obtenir des produits de condensation contenant des structures N,O-acétal ou carbonamide.

4. Utilisation des produits de condensation contenant des structures N,O-acétal ou carbonamide selon la revendication 1 ou 2 comme additif à des produits de lavage et de nettoyage pauvres en phosphates et dépourvus de phosphates.
